Europäisches Patentamt

European Patent Office

Office européen des brevets

(19)

(11) Publication number: **0 249 406**
**A1**

## (12) EUROPEAN PATENT APPLICATION

(21) Application number: **87304981.1**

(51) Int. Cl.⁴: **H01R 13/62**

(22) Date of filing: **05.06.87**

(30) Priority: **10.06.86 GB 8614118**
**11.02.87 GB 8703146**

(43) Date of publication of application:
**16.12.87 Bulletin 87/51**

(84) Designated Contracting States:
**DE FR IT**

(71) Applicant: **ALLIED CORPORATION**
**Columbia Road and Park Avenue P.O. Box**
**2245R (Law Dept.)**
**Morristown New Jersey 07960(US)**

(72) Inventor: **Faller, John Michael**
**15 Princes Way Detling**
**Maidstone Kent ME14 3LB(GB)**

(74) Representative: **Abnett, Richard Charles et al**
**REDDIE & GROSE 16 Theobalds Road**
**London WC1X 8PL(GB)**

(54) **Multi-core cable connectors.**

(57) A generally rectangular multi-core flat cable con-
nector carries first and second rectangular connector
shells (61, 62) each carrying a plurality of electrical
contacts in respective insulating inserts, the contacts
in one shell being respectively electrically connec-
table with contacts in the other shell when the shells
are plugged together one within the other and
wherein one shell carries on the opposed and nar-
rower sides thereof a pivotted manually operable
locking lever (71, 74) provided with hooked ends
(102) engageable with recesses(101)of the other
shell.

EP 0 249 406 A1

## Multi-core Cable Connectors.

This invention relates to multi-core cable connectors and relates more especially but not exclusively to electrical cable connectors.

Multi-core cables and connectors are now well established in the field of electronics for interconnecting equipment made up of discreet units. Such cables and connectors thereby enable the units to be individually disconnected from a complete system for checking , calibration or replacement and separate utilisation.

The present invention seeks to provide a compact multi-core connector assembly which whilst affording such adaptability offers mechanical and electrical characteristics as near as possible to those provided by a continuous cable.

The invention may not be limited to electrically conducting multi-core cables but may be employed if require to interconnect fibre optic cables or cables incorporating combinations of fibre optic cores and electrically conductinb cores.

According to the present invention there is provided a multi-core cable connector comprising a first connector shell carrying a first contact insert and a second connector shell carrying a second contact insert said first shell being abuttable (via a gasket or other spacer if required), to provide inter-engagement between individual connector elements retained in the first and second inserts and characterised in that the first shell has a manually releaseable locking lever at least partially incorporated within the combined profile of the two shells for retaining the first shell in abutment with the second shell.

In order that the invention may be more clearly understood and readily carried into effect the same will be further described by way of example with reference to the accompaning drawings of which:

Fig. 1 illustrates a perspective view of a plug shell and a socket shell of a multi-core cable connector

Fig. 2 illustrates a part-sectional view through an assembled multi-core connector as shown in Fig. 1,

Fig. 3 illustrates a perspective view of components of a further connector and

Fig. 4 (a) (b) and (c) illustrate enlarged sectional views of a connector made up of parts shown in Fig. 3.

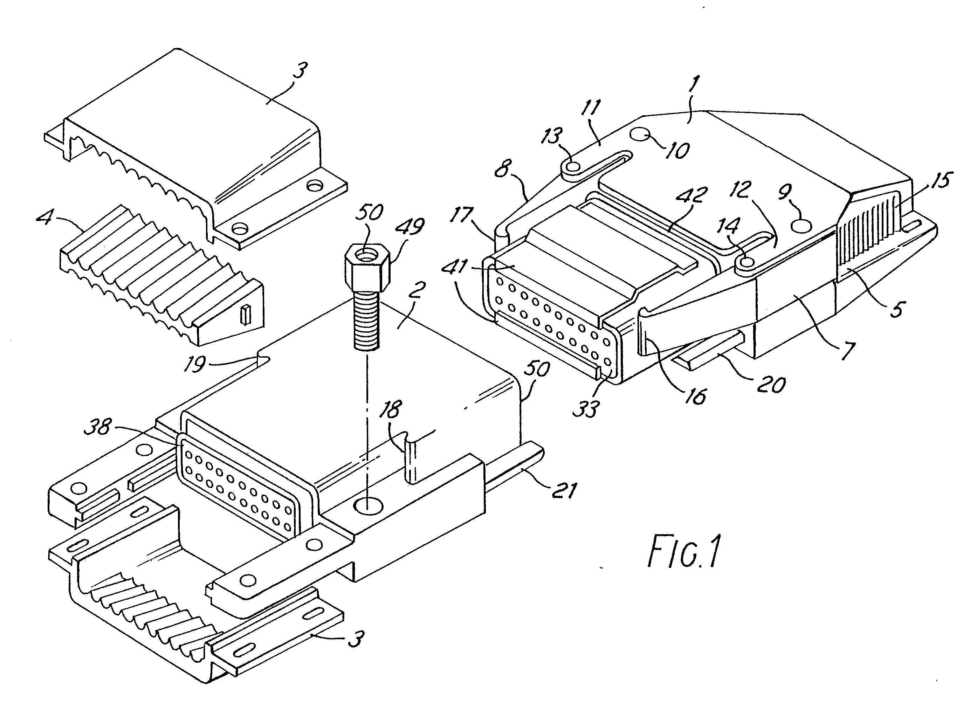

Referring to Fig. 1, the multi-core cable connector shown therein consists of a first metal shell denoted by reference 1 which is insertable into a second metal shell denoted by reference 2. The shells are each adapted to receive a pair of screened flat ribbon cables, these two cables in the present example together providing a total of 20 cores in two rows. In the case of shell 2, a back-shell cover 3 is shown removed together with a spacing and clamping block 4 which in the completed assembly both grips and maintains apart the two flat cables. A similar back-shell cover and clamping block is provided, on the underside of the shell 1, which plugs into the shell 2. The first shell denoted by reference 1 is formed by the casting of aluminium or other suitable electrically conducting metal and is provided with shaped recesses such as 5 on each side within which pivotted block levers 7 and 8 are located to be rotatable through small angles about respective pivot pins 9 and 10. Portions of the shell 1 denoted by references 11 and 12 are resiliently deflectable to allow engagement and disengagement with apertures 13 and 14 of respective dimples on the upper surfaces of 7 and 8, to provide click-stop location of these levers in the positions shown. Thus by depression of outer ends such as 15 of lever 7 and lever 8 hooked ends16 and 17 of the levers are outwardly moveable to permit release thereof from respective complimentary shoulders 18 and 19 of the shell 2 to permit separation of the two shells when they are assembled together.

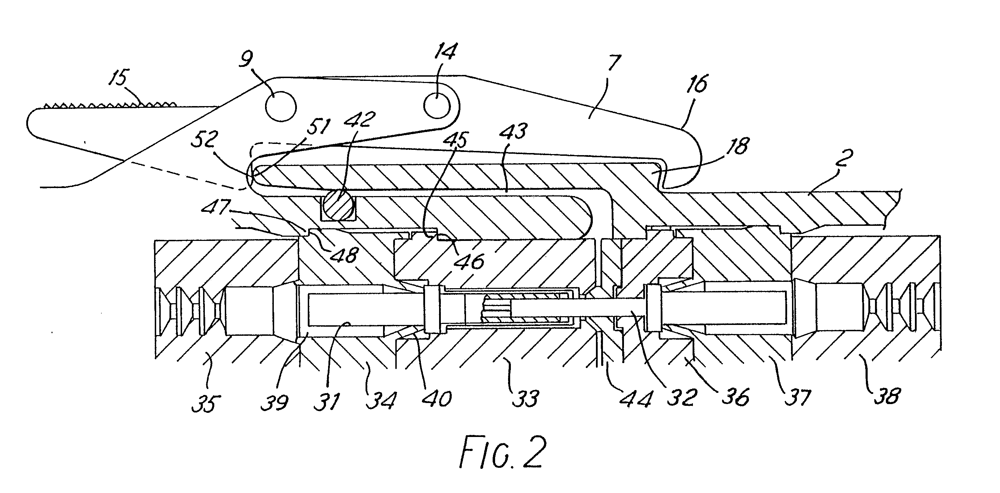

The shape of the levers 7 and 8 and the manner in which the hooked ends 16, 17 thereof engage with the shoulders of the shell 2 is more clearly to be seen with reference to Fig. 2. for the lever 7. It will be observed therefrom that, close to the pivot pin 9, the lever 7 has an abutment 51 engageable with an abutment 52 of the 2 in a sense to urge the lever into its locking position when the shells are brought together.

A further feature of the multi-core cable connector of Fig. 1 is the provision of hexagonal polarising keys such as seen at references 20 and 21. The parts visible are half-hexagonal but they have hexagonal roots which locate in hexagonal apertures in the respective shells and each can be located in one of six positions. Given that further such keys are provided, not seen, on the other side of the connector, a maximum of 36 discreet plug-types can be defined by the positioning of these keys. This is useful in complex systems where erroneous inter-connection or attempts at erroneous inter-connection are always a possibility. In order to make a valid connection between shell 1 and shell 2 it is essential that the larger flat surface of one half-hexagon slidingly aligns with a complimentary surface of the other half-hexagon and that this shall occur for both pairs.

Referring again to Fig. 2, the part-sectional view shown therein includes a typical arrangement of one socket contact denoted by ref. 31, within the shell 1 and a complementary inter-connecting plug-in or pin contact 32 retained within the shell 2. It will be appreciated that in the present example there are twenty such pairs of contacts, contacts such as 31 all being located within within a single contact insert 33 which is itself retained in the shall by a push-in retention member 34. Since contact insert 33 has an annular shoulder 45 which rests against an internal annular shoulder 46 of the shell 2 and the push-in retention member 34 has an annular shoulder 47 which after assembly rests against shoulder 48 of the shell, these components are precisely positioned on the shell. Respective cores of the flat cables enter through a suitable insert or grommet 35 retained in the shell by covers such as 3 in Fig. 1.

Similarly, the pin-contacts carried within the shell 2 are retained in a pin insert 36 which itself is located in position in the shell by a retention member 37 the cable cores again entering by an insert or grommet 38. Whilst the precise shape and/or configuration of the internal components of the connector are not identical to previous arrangements, the manner of retention of the socket contacts and pin contacts within respective inserts 34 and 37 is more or less conventional and it will be seen that these contacts may be individually released if required by insertion of a suitable tool for example into the cylindrical space 39 to outwardly spread retaining fingers such as 40 to permit withdrawal of the respective contact.

As well as providing respective inter-connection of the respective cores of the flat cables, it is desirable that the metal shells make good contact with one another and are not susceptible to E.M. interference. A suitable contact spring denoted by reference 41 is, therefore, provided mounted on the shell 2 together with a conductive 'O' ring 42 each of these items resiliently bridging a space 43 between the assembled shells. Furthermore, a resilient face seal 44 is carried on the pins such as 32 within the shell 2 and is shaped to provide good sealing engagement with the contact insert 33 when the two shells are pressed together and thereby provide a further precaution against the ingress of moisture or other contamination. It will be appreciated from the foregoing that after assembly of the two shells 1 and 2 together in making a connection, the operator is simply required to ensure that the inner ends 16 and 17 of the levers 7 and 8 are in engagement with the respective shoulders 18 and 19, to complete the assembly and prevent any possibility of the shells being pulled apart.

One of two suitable mounting screws for the shell 2 is shown at 49 in Fig. 1 whereby this shell can be mounted to a surface not shown. Furthermore, such screws are conveniently provided with tapped holes 50 whereby two or more such shells can readily be mounted one above the other if required.

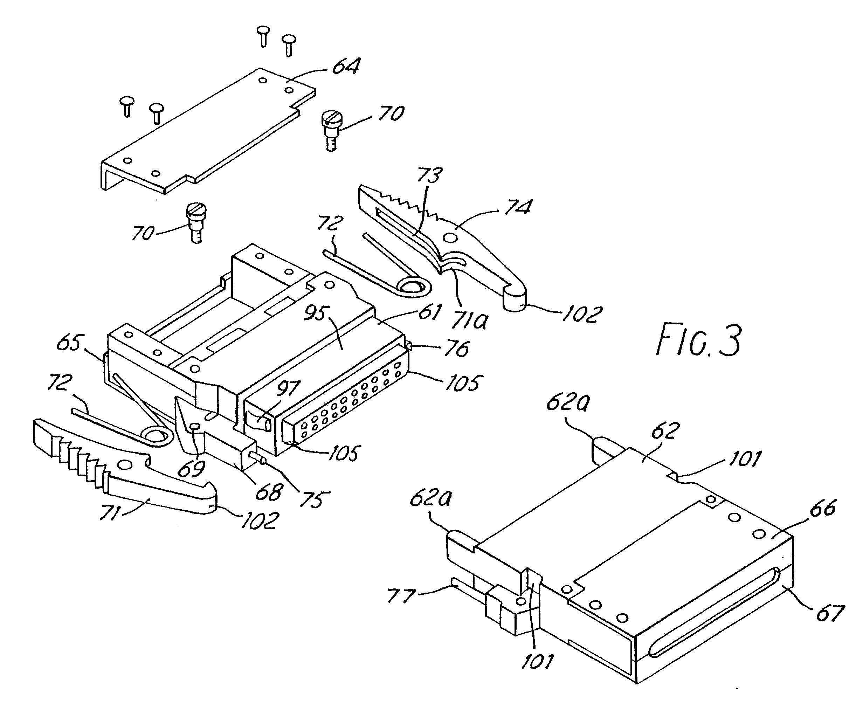

Referring now to Fig. 3, the further multi-core cable connector shown therein is approximately actual size and consists of a first metal sehell denoted by reference 61 which is insertable into a second metal shell denoted by reference 62. Cable-clamping back-shell covers are provided for the back ends of shells 61 and 62, these back-shell cofers being denoted by reference 64, 65, 66 and 67 and back-shell cover 64 is shown not assembled. The back-shell cofers can take a vasriety of shapes determined by the type and quality of cables used but those particularly shown are for clamping single, flat-ribbon cables. The shell 61 is provided at each side thereof with a shaped protruberence, such as 68 provided with a tapped hole 69 for receiving a pivot screw 70 of a cam-lever 71. In order to urge the cam-lever into a locking position in relation to the shell 62 when assembly thereto, lever 71 is assembled to its shell together with a spring 72 which located in a groove 73 as indicated cam-lever. The two levers have hook-shaped ends 102 and thereby provide means for locking the two shells 61 and 62 together in generally similar manner to the cam-levers 7 and 8 of Fig. 1, by abutments 71a and 62a, except that they also are assisted by resilient means comprising springs 72 which urge the levers towards their locking positions.

The shell 61 is provided, in its respective protruberence such as 68, with hexagonal apertures for receiving cut-away hexagonal key members 75 and 76, which can be arranged to be complimentary to correspond cut-away key members such as 77 of the shell 62 when the two shells are assembled together. Again, this is for the purposes of preventing inappropriate or erroneous coupling of connectors which are not intended to be assembled together.

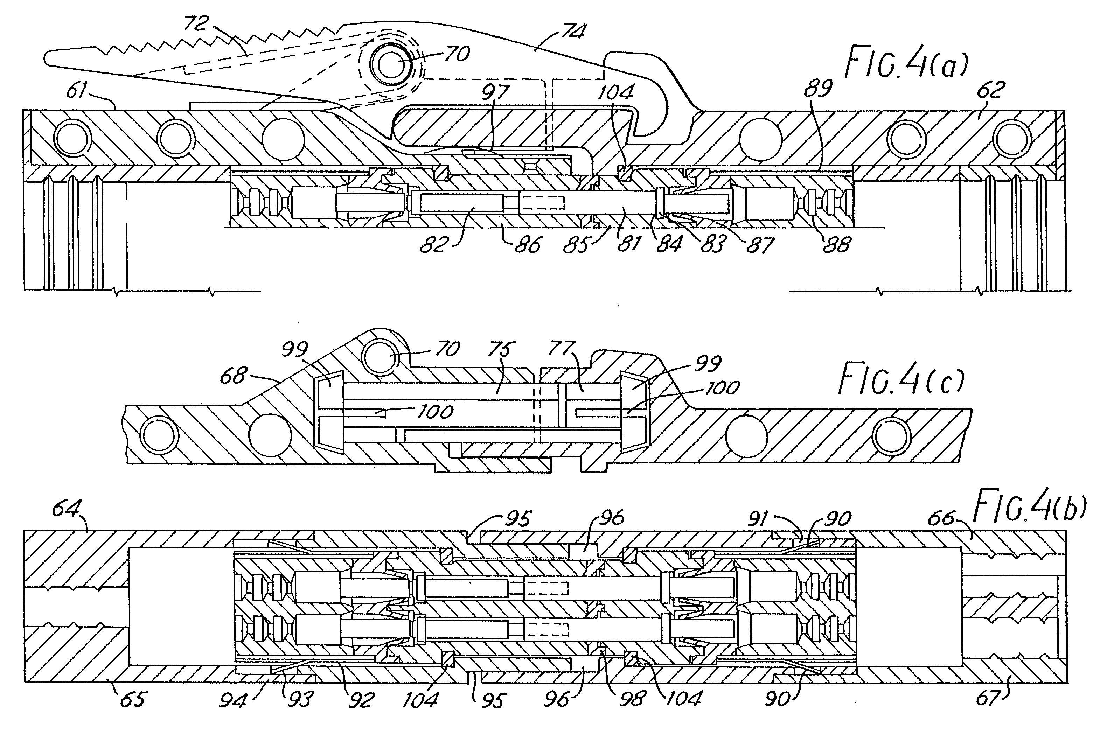

Referring to Fig. 4 of the drawings, Fig. 4a shows a section through the assembled pair of connector shells 61 and 52 and corresponding parts thereof are denoted by the same reference numerals as used in Fig. 3. The seection of Fig. 4a is a plane section which passes through a female contact denoted by reference 81 and the male contact denoted by reference 82. Contact 81 has an annular flange 83 which locates against a stop 84 formed in a respective one of a plurality of recesses in an insulating insert 85 which itself sealingly engages with the shell 62 via a resilient gasket 104. The insert 85 is located in position by means of a retention member 87 which, togehter with a cable core spring insert or grommet 88, is retained in position by a springy metal retention clip 89 having outwardly extending tines such as tines 90 which are visible in the transverse sectional view of Fig. 4b. These tines engage in apertures 91 formed in the body of the shell 62 and which are accessible from the exterior. Removal of back-shell covers 66 and 657 and depression of the tines therefore permits removal of the contact inserts. Similar means are provided for retaining the contact male pins such as 82 in position in an insulating insert 86 in the other shell 61, the whole being retained therein by means of an identical reterntion clip 92 with respective tines 93 engaging in apertures 94 of the body of the shell 61. The upper and lower surfaces of the shell 64 are dimensioned to be close fit within internal surfaces 96 of the shell 62 when the two shells are brought together to provide inter-connection between the pins such as 82 and the sockets such as 81. However, it will be observed that earthing springs such as 97 are mounted to each side of the shell 61 to provide good earthing connection between shell 61 and shell 52 on assembly. Furthermore, a resilient rubber gasket 98 is fitted within shell 62 over the socket pins such as 81 to provide mutual sealingly between the respective inserts to protect the contacts against the ingress of moisture or other contaminant material. Further protection against ingress of foreign matter is provided by the resilient gasket rings 104 internally trapped between the contact inserts and the respective shells 61 and 62.

The fragmental sectional view of Fig. 4(c) illustrates a section through the lugs such as 68 which not only carry the pivot screws 70 for the ca levers 71 but also they carry the aforementioned cut-away hexagonal pins 75 and 77 to only marry with each other when they are correctly orientated in the respective shells. The hexagons 75 and 77 are each provided with a head such as 99 together with partial cuts 100 along their length to permit springing together of the two halves permitting removal and resetting of the orientation of the hexagons as required.

As indicated at reference 105 in Fig. 1, the inserts such as 85 which carry the contacts within the connector shells can carry chamfers which correspond with internal corner fillets in the shells. This ensures correct and unambiguous assmelby of the inserts to the shells.

As in the case of the connector in Fig. 1, the two shells 61 and 52 are readily spearated by gripping both sides of the shell 62 around the grips of levers 71 and 74. This overcomes the influence of the springs 72 in this emobidment and permits the hook ends 102 to be lifted out of engagement with the respectie recesses 101 of shell 62. In the absence of such depression of the grips of levers 74 and 71, the two shells are retained strongly and securely together.

Although now shown in Fig. 3, the back-shell covers of the shells 61 and 52 may be adapted, similarly to those shown in Fig. 1, to incorporate a cable spacer and to accept two or more flat cables. The sectional view of Fig. 4b, illustrates such a possibility in covers 66 and 67.

It will be appreciated from the foregoing that a multi-circuit cable connector in accordance with the present invention as shown in the drawings provides a neat, strong and robust arrangement wherein locking means for locking the two shells together are provided within the overall external dimensions of the assembly. Nothing less than intentional operation of the levers by depressing ends such as 15 which are recessed in the shell 1 can therefore result in unlocking of the levers to permit separation of the shells. The clamping means for the cables in the back-shell covers can be made as robust as necessary to withstand as much strain as the cables themselves are capable of withstanding. The polorizing keys such as 20 and 21 moreover provide a large number of unique combinations which prevents inadvertent erroneous coupling of incompatible shells.

Although the invention has been described more especially in relation to connectors with electrical conductors, the principles and features thereof may equally be applied to fibre optic connectors.

## Claims

1. A multi-core cable connector comprising a first connector shell (1; 61) carrying a first contact insert (33; 86) and a second connector shell (2; 62) carrying a second contact insert (37; 85 ) said first shell being abutable (via a gasket or other spacer if required) to provide inter-engagement between individual connector elements retained in the first and second inserts and characterised in that the first shell has a manually releaseable locking lever (7; 74) at least partially incorporated within the combined profile of the two shells for retaining the first shell in abutment with the second shell.

2. A multi-core cable connector as claimed in claim 1, characterised in that said manually releaseable locking lever (71) is carried by a protruberance (68) of said first shell.

3. A multi-core cable connector as claimed in claim 1 or 2 characterised in that said shells are of generally rectangular shape each providing two pairs of opposing sides said locking lever being one of a pair of such levers pivotally mounted on protruberences (68) on one pair of sides of the first shell.

4. A multi-core cable connector as claimed in claim 1, 2 or 3 characterised in that the or each said lever is proviadd with a hook shaped portion (102) for engaging a recess (101) of the second shell.

5. A multi-core cable connector as claimed in claim 2, 3 or 4 characterised in that a said shell has means (75, 77) locatable in one of a plurality of positions relative to complimentary means of the second shell for preventing mismatching of shells.

6. A multi-core cable connector as claimed in claim 5 characterised in that said means (75) is in a said protruberance (68).

7. A multi-core cable connector as claimed in any preceeding claim, characterised in that the or each said locking lever has abutment means (71a) acted upon by abutment means (62a) of the second shell when the shells are brought together the action thereof being to urge the respective lever towards its locking position.

8. A multi-core cable connector as claimed in any preceding claim characterised in that the or each said locking lever has resilient means (72) urging it towards its locking position.

9. A multi-core cable connector substantially as described herein with reference to Fig. 1 and Fig. 2 or Fig. 3 and Fig. 4 of the accompanying drawings.

FIG.1

FIG. 2

0 249 406

FIG.3

FIG.4(a)

FIG.4(b)

FIG.4(c)

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | EP-A-0 048 085  (AMP)<br>* Page 1, line 24 - page 2, line 10; page 6, line 22 - page 7, line 26; figure 2 *<br>--- | 1-9 | H 01 R   13/62 |
| Y | US-A-4 178 051  (AMP)<br>* Column 1, lines 39-57;  figures 1,2 *<br>--- | 1-9 | |
| Y | US-A-4 568 134  (V.D. DIMONDI)<br>* Column  3, line 17 - column 4, line 26; figure 1 *<br>--- | 5,9 | |
| Y | FR-A-2 382 147  (INTER-ELEC)<br>* Page 4, line 40 - page 5, line 27; figures 1,2 *<br>--- | 8,9 | |
| A | FR-A-2 268 370  (C. DUCLAY) | | TECHNICAL FIELDS SEARCHED (Int. Cl.4)<br><br>H 01 R   13/00<br>H 01 R   23/70 |

-----

The present search report has been drawn up for all claims

| Place of search | Date of completion of the search | Examiner |
|---|---|---|
| THE HAGUE | 19-08-1987 | CRIQUI J.J. |